# EUROPEAN PATENT APPLICATION

(11) **EP 2 452 744 A1**
(43) Date of publication of application: **16.05.2012**
(21) Application number: 10796764.8
(22) Date of filing: 09.07.2010
(51) Int. Cl.: B01J 20/04, B01J 20/12, B01D 53/50, C02F 1/28

(54) **REACTIVE ABSORBENTS AND THE USE THEREOF FOR DESULPHURIZING GASEOUS STREAMS**

(30) Priority: 09.07.2009 ES 200930431
(71) Applicant: Consejo Superior De Investigaciones Científicas (CSIC), 28006 Madrid (ES)
(72) Inventor: ÁVILA GARCÍA, Pedro, 28049 Madrid (ES); BIRK RASMUSSEN, Soren, 28049 Madrid (ES); YATES BUXCEY, Malcolm, 28049 Madrid (ES)
(74) Representative: Curell Suñol, Jorge
(86) International application number: PCT/ES2010/070479
(87) International publication number: WO 2011/004052

(57) **Abstract**

The present invention relates to a porous material that comprises a clay substrate modified by means of a pore-generating agent and at least one oxide of a metal selected from the first transition series. Furthermore, the invention relates to a method for obtaining said material and to the use of said material for desulphurizing gaseous streams, especially for the elimination of H₂S.

## Description

This invention relates to a porous material that comprises clay and at least one oxide of a metal from the first transition series, to the method for obtaining these materials and the use of said materials for desulphurizing gaseous streams.

### STATE OF THE ART

The emission of sulphur components that cause bad odours, damage to the health of the workers and the corrosion of pumping systems, calls for the development of new and more efficient treatment systems, which prevent the exit into the atmosphere of said compounds, including those whose main compound is hydrogen sulphide, H₂S.

Chemically, H₂S emissions are associated with the anaerobic conditions in the collectors with low water flows and/or high room temperature. Except when operating at high pH values, the presence of sulphides in waste waters produces the release of hydrogen sulphide into the atmosphere in contact with the surface of the water.

The H₂S concentrations in sewage works vary considerably, but in normal conditions they are between 5 and 15 ppm (concentration in the air), with extreme values of up to 60-80 ppm. It is worth mentioning that, although the H₂S can be detected due to its characteristic odour of rotten eggs, when it is present in concentrations equivalent to or higher than 0.13 ppm, the daily exposure limit (VLA-ED) is 10 ppm over 8 hours within the period of one 40-hour working week.

Generally, today, all waste water treatment facilities have a chemical system for treating and eliminating odours by means of towers for washing air contaminated with hydrogen sulphide: sodium hydroxide and sodium hypochlorite or other alternative systems. However, all these systems tend to be costly and ineffective in some situations with a massive presence of hydrogen sulphide and mercaptans in the air to be treated.

At present, to eliminate the H₂S in waste water treatment plants activated carbons are used as adsorbents, impregnated with an alkaline solution. The basic character of the substrate easily ensures the reaction with the molecule of H₂S acid, and the sulphur compounds are deposited in the adsorbent in the form of various species, such as elemental sulphur, sulphites and sulphates, resulting from the oxidation of the original sulphur. In order to carry out this oxidation, the surface of the carbon includes variable amounts of oxides from metals such as Fe, Zn or even Ca. Thus, Bandos T. (Journal of Colloid and Interface Science 246, 1-20 (2002)), describes a study based on using activated carbon adsorbents impregnated with alkaline solutions, which allows purifying this type of gas very effectively, thereby allowing it to be applied to purifying the gases in EDAR (waste water treatment plant). Thus, US20070000385 describes a method of eliminating H₂S and other odour-generating compounds and other acid gases by using adsorbents based on activated carbon on the surface of which magnesium and/or calcium oxides have been distributed.

Furthermore, various types of microporous materials other than carbon have been used, such as for example clays from the group of hormite (EP1501913), alone or mixed with other dioxides as is the case of US20070129240, where an adsorbent is proposed that is based in the use of calcinated mixtures (100-650°C) of FeOX-CaSO₄ on Al₂O₃, or even zinc oxide (US 20060058565).

Also, the use of nitrogenated organic waste has been proposed (WO/2002/043858) as additives, and including bacteria that contain Fe (II) (EP1572325) to facilitate the oxidation of the sulphur.

In addition, Stepova, Maquarrie and Krip (Applied Clay Science 42 (2009) 625), for the neutralisation of H₂S in low concentrations present in gaseous emissions, consider the use of bentonites rich in carbonate modified by iron and copper chlorides. Such that the best time values of effective protection action (time until H₂S is detected in the column outlet) were obtained for the bentonite modified with copper hydroxide. The results indicated that on the surface of the modified samples the hydrogen sulphide reacts with the hydroxide from the metal, forming sulphides.

Taking into account that the adsorption bed of contaminating gases in the waste water plant generally operates with gases having a relative humidity close to 100%, the process of retaining them is achieved by means of a liquid film or droplets dispersed on to the surface of the substrate, whereby it can be considered that the H₂S is absorbed first in the film of water on the surface of the adsorbent, causing its dissociation into bisulphide ion, HS⁻, which can be easily oxidised into species that are finally adsorbed in the micropores. This means that the process of retaining the H₂S is carried out in a first absorption stage at a nanometric scale, in the micro and mesopores that contain condensed water due to capillary forces, much more quickly than the conventional absorption of other types of "acid" pollutants, as in the case of the NOx, SOx and even the CO₂, whose molecules must undergo a prior chemical reaction in order to be transformed into an ionic acid. Thus it can be concluded that when H₂S is absorbed into an alkaline solution, HS⁻ is formed at a much higher speed than, for example, the diffusion process.

This fact implies that in this process the porous structure of the material has a decisive influence, and the importance of this is referenced by M. Steijns and P. Mars Ind. Eng. Chem.. Prod. Res. Dev. 16 (1977) 35. Subsequently H.-L. Chiang, J.-H. Tsai, D.-H. Chang and F.-T. Jeng in Chemosphere 41 (2000) 1227) by means of kinetic studies, showed that the limiting stage of the speed of this process is the diffusion inside the pores and finally, C. Tien revealed how the porous structure affects the process effectiveness coefficient.

In short, these studies basically establish the presence of a catalyst system, where the limiting step is the diffusion of gaseous H₂S from the gaseous stage to the gas-liquid interstage of the film of water deposited on the surface. Consequently it is worth considering that, in addition to the chemical properties of the surface of the adsorbent, and the characteristics of the micropores of the materials used as adsorbents, generally reflected in their high specific surface, it is necessary to take in to account the overall porous structure of the material, paying particular attention to the "meso" and "macro" pores.

### DESCRIPTION OF THE INVENTION

In a first aspect, this invention relates to a material that comprises:
- a clay substrate modified by means of a pore-generating agent and
- at least one oxide of a metal selected from the first transition series.

In a preferred embodiment, in the material of this invention the clay is a natural, fibrous clay. In a more preferred embodiment, the natural, fibrous clay is sepiolite.

The natural sepiolite used in this invention is compact α-sepiolite that is very abundant in Spain, whose fibrous morphology and peculiar structure is described in detail in the review published by Alvarez, A., Palygorskite- Sepiolite Ocurrentes, Genesis and Uses. Section VI, pp 253-286. Ed. by Singer and Galan. Elsevier. 1984.
The α-sepiolite used when it is treated at 700ºC for 4 hours in air has a specific surface of 100 m²g⁻¹, a total pore volume of 0.11 cm³g⁻¹, formed essentially by mesopores of the order of 30nm in diameter.

As a pore-generating agent a carbonaceous material is used which is mixed with the clay before it is conformed. When burned during the calcination process it releases CO₂ and H₂O producing a high porosity solid. Starch or organic polymers such as polyvinyl alcohol can be used as the pore-generating agent, although it is preferable to use micronized carbon.

In another preferred embodiment, in the material of this invention the oxide of a metal from the first transition series is selected from the oxides of Fe, Co, Cu or Mn or any of the combinations thereof.

In another preferred embodiment, in the material of this invention the oxide of one metal from the transition series is present in a proportion of between 1 and 10% by weight.

This invention describes a material having as the main component a substrate based on a clay of a mesoporous nature whose porosity has been noticeably altered by including a pore-generating agent that acts as a moulding template, providing high macroporosity, that translates into a considerable increase in the efficiency of the system due to a noticeable reduction in the diffusion limitations of the process and, as a secondary component, one or various oxides of the metals from the first transition series, particularly Fe, Co, Cu and/or Mn, which can be included either by impregnating the substrate before or after it has been shaped or as an impurity in the composition of the starting material, which are responsible for the oxidation capacity of the sulphide into elemental sulphur or other sulphur species.

In another aspect, this invention describes a method of obtaining a material as it has been described beforehand which comprises the following stages:
a. Homogenisation of a mixture that comprises a clay and a pore-generating agent
b. Extruding and shaping the mixture obtained in the preceding stage.
c. Drying the product obtained in the preceding stage in various stages at a temperature between 80 and 150°C.
d. Calcinating the product obtained in the preceding stage at a temperature between 600 and 800ºC.
where an addition is made to the mixture obtained in stage (a) or to the product obtained in stage (d) of a solution of at least one organic or inorganic salt of a metal selected from the first transition series.

In a preferred embodiment, the method of this invention also comprises carrying out again stages (c) and (d) when a solution of at least one organic or inorganic salt of a metal selected from the first transition series is added to the product obtained in stage (d).

This invention describes a method for manufacturing this type of materials that consists in preparing a paste by kneading in an aqueous medium a mixture of the micronized powders of the precursors of the substrate, which consist of a natural clay and a pore-generating agent, preferably activated carbon and possibly, a solution of the precursor salt of the metal included as the active phase. Once homogenized the paste undergoes an extrusion process making it pass through a hole or nozzle, allowing it to be shaped as desired and the resulting product is left to dry in different stages at room temperature and subsequently at a temperature between 80 and 150ºC. Subsequently it is calcinated at a temperature between 600 and 800ºC in air, to eliminate the material introduced as pore-generator via combustion.

The material thus obtained has a specific surface of between 60 and 200 m²g⁻¹ (basically the whole external surface) without micropores, but with a total pore volume over 0.7 cm³g⁻¹, mainly made up of mesopores (5-50nm) and macro pores (φ > 50nm) made up of the interparticle gaps, with an average pore size close to 1000 nm.

Once the substrate is obtained, the impregnation of the transition metals (mainly Fe, Co, Mn or Cu) takes place in a final concentration between 1 and 20% by weight, whereby once formed the substrate is immersed in an aqueous solution of the salt of the corresponding metal and stirring is maintained over a given time period, it is eliminated, the excess liquid drained and the resulting material is dried again and calcinated at a temperature between 400 and 600ºC, so as to decompose the precursor salt and form the oxide of the corresponding metal, which remains deposited in a disperse format inside the pores of the prepared substrate.

Finally, depending on the type of compound that is to be impregnated, the impregnation of the solution of the precursor salt can be carried out in the active phase, in the substrate precursor powder during the stage of mixing or even in the actual pore-generating agent, although, it is preferable to carry out the impregnation in the final stage, once the substrate has been obtained.

The thus obtained material, if immersed in a solution of an alkaline hydroxide and left to dry at room temperature, has textural and chemical characteristics that allow it to be used as adsorbent material.

This invention takes into account that the increase in the macroporosity of the adsorbents not only facilitates better process kinetics, but also offers housing on the nano-micro scale for the accumulation of the deposits of the sulphur compounds that are formed. Without these extra large pores, the exposure of the adsorbents to the H₂S stream would be quickly saturated due to the pores becoming blocked by the deposited products.

In another preferred embodiment, in the process of this invention the pore-generating agent in stage (a) is micronized carbon. Preferably, said micronized carbon has a particle size between 2 and 50 µm.

With this method pore-generating agents of different origins and characteristics can be used, with particle sizes 2-50 µm, without significantly altering the indicated method.

In another preferred embodiment, in the method of this invention, the activated carbon is added in a proportion between 20 and 75% by weight with respect to the clay substrate.

In another preferred embodiment, in the method of this invention, the amount of pore-generating agent is used in a proportion equivalent to or less than 5:10 by weight with respect to the final material obtained. In a more preferred embodiment, the pore-generating agent is used in a proportion equivalent to or less than 3:10 by weight with respect to the final material obtained.

As for the amount of pore-generating agent to use in this method, preferably it will have a proportion of 3:10 by weight with respect to the weight of the final substrate. The referenced proportions higher than 3:10 produce pastes that are difficult to extrude and mechanically resistant bodies that are not suitable for industrial application, and lower proportions lead to materials with less porosity development but better mechanical properties that in certain cases can be very interesting.

In another preferred embodiment, in the method of this invention the extrusion in stage (c) is done in the shape of cylinders, plates or monoliths with a beehive structure.

The method described makes it possible to obtain materials with a different physical shape, although, the beehive shape is particularly indicated for the treatment of fluids where the large volumes to be treated and the particles that they contain in suspension make it necessary to use catalysts shaped with parallel channel structures. In another aspect, this invention relates to the use of the material described above for eliminating sulphurous gases from gaseous streams.

In a preferable embodiment, the sulphurous gas that is eliminated is H₂S.

In another preferable embodiment, the gas stream comes from a waste water treatment process.

The material described in this invention combines macroporosity with the use of hydrophilic substrates, which taking into account the conditions of the process, constitutes a key element of the catalyst in a system where the condensed water in the pores provides a very effective medium both for the action of the catalyst oxidising the H₂S with the O₂ in the air, converting it mainly into elemental sulphur, which subsequently is deposited in the said macropores, and for regenerating the metallic oxide, which has been reduced during the catalyst process.

The materials described in this invention are adsorbents which have a high capacity of retaining the hydrogen sulphide present in gaseous emissions, particularly the gases from town waste water treatment (EDAR) or those facilities where the use of the Claus process implies too big an investment, causing their oxidation into species of elemental sulphur, sulphite and/or sulphate.

Throughout the description and claims the word "comprises" and its variants are not intended to exclude other technical characteristics, additives, components or steps. For those skilled in the art, other objects, advantages and characteristics of the invention will become evident partly from the description and partly from putting the invention into practice. The following examples are provided as means of illustration, and are not intended to limit this invention.

### EXAMPLES

The invention is illustrated below by means of tests carried out by the inventors, which do not intend limiting the scope of the invention, and which manifest the specificity and effectiveness of the material described in this invention.

### EXAMPLE 1

Mixing 1100 g of micronized sepiolite with 1000 ml of water and kneading it until it is homogenous, obtaining a semisolid dough, which is placed in the hopper of an extruder and made to pass through the appropriate nozzle to obtain a material in the shape of a monolith with square cells, 2mm on the side and a 0.8 mm thick wall, which air dries at room temperature for 24 hours and then is treated at 150ºC for 24 hours in an air atmosphere and the temperature rises to 700ºC, maintaining the temperature for 4 hours in an air atmosphere. The thus obtained product has a specific surface of 120 m²g⁻¹ (basically the whole external surface) without micropores, but with a pore volume of 0.11 cm³g⁻¹, corresponding essentially to mesopores with a diameter of about 30 nm.

5 g of this material are taken and ground, sieving the resulting particles and selecting those between 2 and 4 mm and immersing them in a 1 molar solution of potassium hydroxide and they are left to dry at room temperature. When they are placed in a 10 mm diameter cylindrical reactor and a gaseous stream of 100 ml/min (CN - normal conditions) is passed through them with a H₂S concentration of 8000 ppm and relative humidity of 80%, at a temperature of 30ºC and pressure close to atmospheric pressure, it results that the concentration of H₂S on exit is less than 5 ppm during 91 minutes, which implies that the amount of H₂S that has been retained during the test in a dynamic system until the appearance of H₂S at the exit corresponds to 22 mg H₂S per gram of adsorbent.

### EXAMPLE 2

A homogenous mixture is prepared by mixing 1000 g of sepiolite and 300 g of carbon, both micronized, which is placed in a kneading machine where water is added until a semisolid dough is obtained, which if fed into the hopper of an extruding machine and passed through an appropriate nozzle, obtains a material in the shape of a monolith of squared cells, 2 mm on the side and with 0.8 mm thick wall. This material dries at room temperature during 24 hours and is then treated at 150ºC for 24 hours in an air atmosphere and the temperature rises to 700ºC, maintaining the temperature for 4 hours in an air atmosphere. The thus obtained product has a specific surface of 100 m².g⁻¹ (basically the whole external surface) without micropores, but with a mesopore volume of 0.28 cm³g⁻¹ and a macropore volume of 0.53 cm³g⁻¹. The pores system is made up of mesopores measuring 30 nm in diameter and the macropores, which have an average size close to 1000 nm in diameter.

5 g of this material are taken and ground, sieving the resulting particles and selecting those between 2 and 4 mm and immersing them in a 1 molar solution of potassium hydroxide. They are left to dry at room temperature and are placed in a 10 mm diameter cylindrical reactor passing a gaseous stream of 100 ml/min (CN) through them with a H₂S concentration of 8000 ppm and relative humidity of 80%, at a temperature of 30ºC and pressure close to atmospheric pressure, and it is observed that the concentration of H₂S on exit is less than 5 ppm during 169 minutes, which implies that the amount of H₂S that has been retained during the test in a dynamic system until the appearance of H₂S at the exit corresponds to 41 mg H₂S per gram of adsorbent.

### EXAMPLE 3

770 g of sepiolite and 231 g of activated carbon, both micronized, are mixed. Once a homogenous mixture has been obtained, it is placed in a kneading machine and the kneading begins slowly adding a dissolution prepared by dissolving 334 g of iron nitrate in 800 ml of water. Once the addition of water has been completed, the kneading is maintained for 4 hours. The thus obtained dough is placed in the hopper of the extruding machine and passed through a nozzle with cylindrical holes, which makes it possible to obtain cylinders that are 3 mm in diameter and 5 mm average length. The thus obtained material is air dried at room temperature for 24 hours and then treated at 150ºC for 24 hours in an air atmosphere and finally the temperature rises to 700ºC, where the temperature is maintained for 4 hours in an air atmosphere.

The thus obtained material has a specific surface of 100 m².g⁻¹, with a mesopore volume of 0.31 cm³g⁻¹ and a macropore volume of 0.58 cm³g⁻¹. The pore system is made up of mesopores that are 30 nm in diameter and the macropores, which have an average size close to 1000 nm in diameter.

5 g of this material are taken and ground, sieving the resulting particles and selecting those between 2 and 4 mm and immersing them in a 1 molar solution of potassium hydroxide. They are left to dry at room temperature and are placed in a 10 mm diameter cylindrical reactor passing a gaseous stream of 100 ml/min (CN) through them with a H₂S concentration of 8000 ppm and relative humidity of 80%, at a temperature of 30ºC and pressure close to atmospheric pressure, and it is observed that the concentration of H₂S on exit is less than 5 ppm during 486 minutes, which implies that the amount of H₂S that has been retained during the test in a dynamic system until the appearance of H₂S at the exit corresponds to 118 mg H₂S per gram of adsorbent.

### EXAMPLE 4

If 5.5 g of the material whose preparation is described in Example 1 having a total pore volume of 0.11 cm³g⁻¹ (meso + macropores) are taken and immersed in 30 ml of a solution containing 8.3 g of FeS04·7H2O, dried and drained, leaving them to air dry at room temperature for 24 hours and then treating the at 150ºC for 24 hours in an air atmosphere and raising the temperature to 450ºC, where the temperature is maintained for 4 hours in an air atmosphere, a product is obtained that maintains the pore values in values close to those of the substrate, but have a greater H₂S retention capacity.

If 5 g of this material are taken and ground, sieving the resulting particles and selecting those between 2 and 4 mm and immersing them in a 1 molar solution of potassium hydroxide, they are left to dry at room temperature and are placed in a 10 mm diameter cylindrical reactor passing a gaseous stream of 100 ml/min (CN) through them with a H₂S concentration of 8000 ppm and relative humidity of 80%, at a temperature of 30ºC and pressure close to atmospheric pressure, it is observed that the concentration of H₂S on exit is less than 5 ppm during 118 minutes, which implies that the amount of H₂S that has been retained during the test in a dynamic system until the appearance of H₂S at the exit corresponds to 28.5 mg H₂S per gram of adsorbent.

### EXAMPLE 5

If 5.43 g of the material whose preparation is described in Example 2 having a total pore volume of 0.81 cm³g⁻¹ (meso + macropores) are taken and immersed in 30 ml of a solution containing 8.17 g of FeSO4·7H2O, dried and drained, leaving them to air dry at room temperature for 24 hours and then treating the at 150ºC for 24 hours in an air atmosphere and raising the temperature to 450ºC, where the temperature is maintained for 4 hours in an air atmosphere, a product is obtained that maintains the pore values in values close to those of the substrate, but have a greater H₂S retention capacity.

If 5 g of this material are taken and ground, sieving the resulting particles and selecting those between 2 and 4 mm and immersing them in a 1 molar solution of potassium hydroxide, they are left to dry at room temperature and are placed in a 10 mm diameter cylindrical reactor passing a gaseous stream of 100 ml/min (CN) through them with a H₂S concentration of 8000 ppm and relative humidity of 80%, at a temperature of 30ºC and pressure close to atmospheric pressure, it is observed that the concentration of H₂S on exit is less than 5 ppm during 1866 minutes, which implies that the amount of H₂S that has been retained during the test in a dynamic system until the appearance of H₂S at the exit corresponds to 453 mg H₂S per gram of adsorbent.

### EXAMPLE 6

If 6.49 g of the material whose preparation is described in Example 2 having a total pore volume of 0.81 cm³g⁻¹ (meso + macropores) are taken and immersed in 40 ml of a solution containing 11 g of CH₃COO)₂Mn·4H₂O, dried and drained, leaving them to air dry at room temperature for 24 hours and then treating the at 150ºC for 24 hours in an air atmosphere and raising the temperature to 450ºC, where the temperature is maintained for 4 hours in an air atmosphere, a product is obtained that maintains the pore values in values close to those of the substrate, but have a greater H₂S retention capacity.

If 5 g of this material are taken and ground, sieving the resulting particles and selecting those between 2 and 4 mm and immersing them in a 1 molar solution of potassium hydroxide, they are left to dry at room temperature and are placed in a 10 mm diameter cylindrical reactor passing a gaseous stream of 100 ml/min (CN) through them with a H₂S concentration of 8000 ppm and relative humidity of 80%, at a temperature of 30ºC and pressure close to atmospheric pressure, it is observed that the concentration of H₂S on exit is less than 5 ppm during 1886 minutes, which implies that the amount of H₂S that has been retained during the test in a dynamic system until the appearance of H₂S at the exit corresponds to 458 mg H₂S per gram of adsorbent.

### EXAMPLE 7

If 5.15 g of the material whose preparation is described in Example 2 having a total pore volume of 0.81 cm³g⁻¹ (meso + macropores) are taken and immersed in 30 ml of a solution containing 8.8 g of CU (NO₃)₂·3H₂O, dried and drained, leaving them to air dry at room temperature for 24 hours and then treating the at 150ºC for 24 hours in an air atmosphere and raising the temperature to 450ºC, where the temperature is maintained for 4 hours in an air atmosphere, a product is obtained that maintains the pore values in values close to those of the substrate, but have a greater H₂S retention capacity.

So, if 5 g of this material are taken and ground, sieving the resulting particles and selecting those between 2 and 4 mm and immersing them in a 1 molar dissolution of potassium hydroxide, they are left to dry at room temperature and are placed in a 10 mm diameter cylindrical reactor passing a gaseous stream of 100 ml/min (CN) through them with a H₂S concentration of 8000 ppm and relative humidity of 80%, at a temperature of 30ºC and pressure close to atmospheric pressure, it is observed that the concentration of H₂S on exit is less than 5 ppm during 1935 minutes, which implies that the amount of H₂S that has been retained during the test in a dynamic system until the appearance of H₂S at the exit corresponds to 470 mg H₂S per gram of adsorbent.

### EXAMPLE 8

If 5.4 g of the material whose preparation is described in Example 2 having a total pore volume of 0.81 cm³g⁻¹ (meso + macropores) are taken and immersed in 30 ml of a solution containing 11 g of CO(NO₃)₂·6H₂O, dried and drained, leaving them to air dry at room temperature for 24 hours and then treating the at 150ºC for 24 hours in an air atmosphere and raising the temperature to 450ºC, where the temperature is maintained for 4 hours in an air atmosphere, a product is obtained that maintains the pore values in values close to those of the substrate, but have a greater H₂S retention capacity.

So, if 5 g of this material are taken and ground, sieving the resulting particles and selecting those between 2 and 4 mm and immersing them in a 1 molar solution of potassium hydroxide, they are left to dry at room temperature and are placed in a 10 mm diameter cylindrical reactor passing a gaseous stream of 100 ml/min (CN) through them with a H₂S concentration of 8000 ppm and relative humidity of 80%, at a temperature of 30ºC and pressure close to atmospheric pressure, it is observed that the concentration of H₂S on exit is less than 5 ppm during 346 minutes, which implies that the amount of H₂S that has been retained during the test in a dynamic system until the appearance of H₂S at the exit corresponds to 84 mg H₂S per gram of adsorbent.

## Claims

1. Material comprising:
- a clay substrate modified by means of a pore-generating agent and
- at least one oxide of a metal selected from the first transition series.

2. Material according to claim 1 where the clay is a natural fibrous clay.

3. Material according to claim 2 where the natural fibrous clay is sepiolite.

4. Material according to any of the claims 1 to 3 where the oxide of a metal from the first transition series is selected between Fe, Co, Cu or Mn or any of the combinations thereof.

5. Material according to any of the claims 1 to 4 where the oxide of a metal from the first transition series is present in a proportion between 1 and 10% by weight.

6. Method for obtaining a material according to the claims 1 to 5 which comprises the following stages:
a. Homogenising a mixture that comprises a clay and a pore-generating agent.
b. Extruding and shaping the mixture obtained in the preceding stage.
c. Drying the product obtained in the preceding stage in different stage at a temperature between 80 and 150ºC.
d. Calcinating the product obtained in the preceding stage at a temperature between 600 and 800ºC.
where an addition is made to the mixture obtained in stage (a) or to the product obtained in stage (d) of a solution of at least one organic or inorganic salt of a metal selected from the first transition series.

7. Method according to the claim 6 that also comprises carrying out again stages (c) and (d) when the addition of a solution of at least one organic or inorganic salt of a metal selected from the first transition series is made to the product obtained in stage (d).

8. Method according to any of the claims 6 or 7 where the pore-generating agent in stage (a) is micronized carbon.

9. Method according to claim 8 where the micronized carbon has a particle size between 2 and 50µm.

10. Method according to any of the claims 8 or 9 where the activated carbon is added in a proportion between 20 and 75% by weight with respect to the clay substrate.

11. Method according to any of the claims 6 to 10 where the amount of pore-generating agent is used in a proportion equivalent to or less than 5:10 by weight with respect to the final material obtained.

12. Method according to claim 11 where the amount of pore-generating agent is used in a proportion equivalent to or less than 3:10 by weight with respect to the final material obtained.

13. Method according to any of the claims 6 to 12 where the extrusion in stage (c) is carried out in the shape of cylinders, plates or monoliths with a beehive structure.

14. Use of the material according to any of the claims 1 to 5 for eliminating sulphurous gases from gaseous streams.

15. Use according to claim 14 where the sulphurous gas is H₂S.

16. Use according to any of the claims 14 or 15 where the gaseous stream originates from a waste water treatment process.
